# FASCICULE DE BREVET EUROPEEN

(11) **EP 4 112 952 B1**
(45) Date de publication et mention de la délivrance du brevet: **03.01.2024**
(21) Numéro de dépôt: 22181436.1
(22) Date de dépôt: 28.06.2022
(51) Int. Cl.: F16C 7/02, F16C 11/06, F16C 23/04, F16C 33/04, F16C 33/12, F16C 9/04

(54) **MANILLE DE FIXATION D'UN MOTEUR D' AÉRONEF COMPRENANT UN COUPLE DE REVÊTEMENTS ANTIFRICTION ENCAPSULES, ET AÉRONEF COMPRENANT UNE TELLE MANILLE**
SCHÄKEL FÜR FLUGZEUGTRIEBWERKSBEFESTIGUNG MIT EINEM PAAR EINGEKAPSELTER ANTIREIBUNGSBESCHICHTUNGEN, UND FLUGZEUG MIT EINEM SOLCHEN SCHÄKEL
AIRCRAFT ENGINE MOUNTING SHACKLE COMPRISING A PAIR OF ENCAPSULATED ANTI-FRICTION COATINGS, AND AIRCRAFT COMPRISING SUCH A SHACKLE

(30) Priorité: 30.06.2021 FR 2107055
(43) Date de publication de la demande: 04.01.2023
(73) Titulaire: Airbus Operations SAS, 31060 Toulouse (FR)
(72) Inventeur: POUPON, Cédric, 31060 TOULOUSE (FR); PAUTIS, Olivier, 31060 TOULOUSE (FR); BLANC, Jonathan, 31060 TOULOUSE (FR)
(74) Mandataire: Cabinet Le Guen Maillet

(56) Documents cités:
- EP-A1- 0 614 722
- EP-A1- 2 963 304
- EP-A1- 3 159 084
- EP-A2- 2 048 389
- FR-A1- 2 887 853

## Description

### DOMAINE TECHNIQUE

La présente invention concerne une manille de fixation pour opérer une liaison entre un moteur d'aéronef et un mât moteur. L'invention concerne plus particulièrement un agencement de revêtements antifriction sur une liaison rotule d'une telle manille, ainsi qu'un aéronef comprenant une telle manille.

### ETAT DE LA TECHNIQUE ANTERIEURE

Des manilles de fixation à deux points ou trois points, encore parfois appelées bielles ou biellettes sont couramment utilisées pour la fixation des moteurs d'aéronefs aux mâts moteurs solidaires de la structure de l'aéronef. Ces attaches moteurs participent à un système d'interface mécanique de transfert d'efforts dit « isostatique », bloquant selon six degrés de liberté, et permettant d'assurer un montage non contraint tout en répondant à des exigences de certification et de sécurité. Les systèmes d'interface mécanique entre un moteur et un mât moteur ont la particularité d'être soumis à des températures importantes, eu égard à la proximité du moteur, notamment pour ce qui concerne les attaches moteurs dites arrière. Des phénomènes de vieillissement prématuré surviennent, notamment du fait des nombreux cycles thermomécaniques que subissent ces éléments des aéronefs. Des techniques de fixation récentes permettent de réaliser des opérations rapides de montage et de démontage de moteurs d'aéronef en utilisant des manilles de fixation moteur dans lesquelles sont insérés des axes traversant également des chapes de ferrures agencées sur un mât moteur ou sur un moteur. Ces manilles de fixation moteur utilisent des revêtements antifriction pour limiter l'usure de surfaces de contact entre des éléments de liaison et améliorer les caractéristiques de l'interface de liaison. Il arrive malheureusement que ces revêtements se dégradent ou s'écaillent progressivement, principalement sur leurs bords ou à partir de leurs bords, entraînant alors un phénomène d'arrachement ou de pelage (ou délaminage) préjudiciable à la qualité des liaisons mécaniques opérées. Ces phénomènes induisent un besoin de changement des pièces de liaison portant les revêtements. Des organes de liaison ou de fixation utilisés dans l'industrie aéronautique et comprenant une liaison rotule sont connus des documents EP 2 963 304 A1, EP 06 614 722 A1, EP 3 159 084 A1, EP 2 048 389 A1 et FR 2 887 853 A1.

La situation peut donc être améliorée.

### EXPOSE DE L'INVENTION

La présente invention vise notamment à créer un encapsulage des revêtements antifriction de surface des éléments de liaison d'une manille de fixation d'un moteur d'aéronef et de permettre de préserver ainsi ces revêtements d'une usure prématurée.

A cet effet, l'invention a pour objet une manille selon la revendication 1 pour la fixation d'un moteur d'aéronef à un mât solidaire de la structure de l'aéronef, par l'intermédiaire d'au moins un axe, la manille comprenant un corps et un point de fixation audit axe par l'intermédiaire d'une liaison rotule, la liaison rotule comprenant une bague présentant une zone extérieure sphérique et un premier alésage, la bague étant assemblée dans une cavité du corps de la manille présentant une forme complémentaire à ladite zone extérieure sphérique,
la manille présentant en outre les caractéristiques :
- la liaison rotule comprend un manchon assemblé dans le premier alésage et présentant un deuxième alésage configuré pour recevoir ledit axe et dont le diamètre s'accroît progressivement pour présenter une surface intérieure évasée à chacune de ses extrémités,
- la surface extérieure sphérique de la bague porte un premier revêtement antifriction réalisé sur une première zone s'étendant au-delà de sa zone de contact avec le corps de la manille et ladite première zone est bordée par des premiers rebords formant saillie par rapport à la surface extérieure sphérique de la bague, autour du premier revêtement, de sorte à former une butée de protection autour du premier revêtement et à l'encapsuler, et/ou
- le deuxième alésage, du manchon, porte un deuxième revêtement antifriction, sur une deuxième zone s'étendant au-delà de sa zone de contact avec ledit axe et ladite deuxième zone est bordée par des deuxièmes rebords formant saillie par rapport à la surface du deuxième alésage, autour du deuxième revêtement antifriction, aux extrémités de la surface intérieure évasée du manchon.

Avantageusement, il est ainsi possible de protéger par une bordure formant saillie et trottoir les bords des revêtements antifriction apposés sur les surfaces d'éléments de liaison mécanique et d'accroître conséquemment la longévité des revêtements en évitant ou en réduisant conséquemment des phénomènes de pelage et de désagrégation. Cela permet en conséquence de réduire les opérations de maintenance ainsi que les coûts y afférents. Il apparaît en outre plus facile de revêtir à nouveau les surfaces concernées en cas d'usure des revêtements.

La manille de fixation selon l'invention peut également comporter les caractéristiques suivantes, considérées seules ou en combinaison :
- Les premiers et deuxièmes rebords présentent une hauteur supérieure ou égale à 0.1 mm.
- La surface de la cavité du corps de la manille présentant une forme complémentaire à ladite zone extérieure sphérique de la bague porte un troisième revêtement antifriction. Cela accroît avantageusement les qualités de l'interface de liaison entre la surface de la zone sphérique de la bague et la surface de la cavité du corps de la manille dans laquelle est logée la bague.
- Le premier revêtement antifriction est réalisé dans un alliage Cuivre Nickel Indium de type Cu36Ni5In ou dans un alliage de Cobalt et présente une épaisseur comprise en 50 µm et 300 µm, préférentiellement 100 µm.
- Le deuxième revêtement antifriction est réalisé dans un alliage Cuivre Nickel Indium de type Cu36Ni5In, dans un alliage Cuivre Aluminium Fe de type CuAlFe, ou dans un alliage de Cobalt et présente une épaisseur comprise en 50 µm et 300 µm, préférentiellement 100 µm.
- Le troisième revêtement antifriction est réalisé par traitement dans la masse ou en matériau nanocomposite de type WC:C-H et présente une épaisseur comprise en 0,2 µm et 50 µm, préférentiellement 5 µm.
- Le corps de la manille, la bague et le manchon sont réalisés dans un même matériau choisi parmi : les alliages de Titane ou les alliages d'acier.

L'invention a également pour objet un ensemble de fixation comprenant une manille telle que précédemment décrite et un axe portant sur sa surface extérieure, un quatrième revêtement antifriction réalisé en matériau nanocomposite de type WC :C-H ou WcCo et présentant une épaisseur comprise en 0,2 µm et 50 µm, préférentiellement 5 µm.

Selon un mode de réalisation, l'axe de l'ensemble de fixation est réalisé dans un matériau choisi parmi : les alliages de Titane ou les alliages d'acier.

L'invention a également pour objet un aéronef comprenant une manille telle que précédemment décrite ou un ensemble de fixation tel que précité.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre, schématiquement et en perspective, un ensemble de fixation d'un moteur d'aéronef à un mât moteur solidaire de la structure d'un aéronef, selon un mode de réalisation ;
[Fig. 2] illustre, en plan de face, l'ensemble de fixation déjà représenté en perspective sur la Fig. 1 en définissant un plan de coupe A-A utile à une description subséquente de modes de réalisation ;
[Fig. 3] est une coupe partielle d'une liaison rotule de l'ensemble de fixation déjà représenté sur les Fig. 1 et Fig. 2, selon la coupe A-A de la Fig. 2 ;
[Fig. 4] illustre schématiquement et de façon agrandie des détails d'implémentation d'éléments représentés sur la Fig. 3 ;
[Fig. 5] illustre schématiquement une liaison rotule d'une manille de fixation d'un moteur d'aéronef; et,
[Fig. 6] représente, en vue de dessus, un aéronef comprenant une manille de fixation d'un moteur d'aéronef selon un mode de réalisation.

### EXPOSE DETAILLE DE MODES DE REALISATION

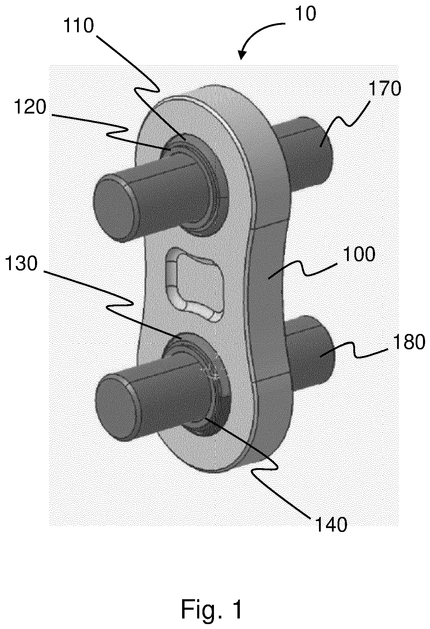

La **Fig. 1** représente schématiquement un ensemble de fixation 10 comprenant une manille de fixation 100 présentant un corps sensiblement plat, une première liaison rotule avec un axe 170 et une seconde liaison rotule avec un axe 180. Une telle manille de fixation est communément appelée manille deux-points. Il est à noter que l'invention décrite ici peut s'appliquer à tout élément de liaison comprenant au moins une liaison rotule et ne se limite pas au cas d'une manille. L'ensemble de fixation 10 est prévu et configuré pour opérer un point de fixation entre un moteur d'aéronef et un mât de moteur d'aéronef solidaire de la structure de l'aéronef. Ainsi, par exemple, l'axe 170 est destiné à être inséré à travers des trous traversants d'une ferrure du mât moteur ou plus précisément des trous traversants agencés dans des flancs d'une chappe de fixation du mât moteur, et l'axe 180 est destiné à être inséré à travers des trous traversants d'une ferrure de fixation du moteur d'aéronef, ou plus précisément des trous traversants agencés dans des flancs d'une chappe de fixation solidaire de ce moteur. Des ensembles de fixation tels que celui représenté ici sont utilisés pour opérer des points de fixation dans une partie dite « avant » d'un moteur d'aéronef, ou encore dans une partie dite « arrière » d'un tel moteur. On entend ici par partie avant d'un moteur d'aéronef une partie du moteur située du côté vers lequel l'aéronef évolue en vol, et on entend par partie arrière d'un moteur d'aéronef, une partie du moteur située du côté opposé à celui vers lequel évolue l'aéronef en vol, c'est-à-dire du côté d'où vient l'aéronef.

La partie avant d'un moteur est généralement constituée des étages de soufflante et de compresseur d'une turbomachine et la partie arrière d'un moteur est généralement constituée des étages de turbines de la turbomachine.

La liaison rotule entre le corps de la manille 100 et l'axe de fixation 170 est réalisée grâce à une bague 110 dite bague intérieure, de forme globalement sphérique, agencée dans une cavité traversante présentant une surface de forme complémentaire à la surface de la zone sphérique de la bague 110. La bague 110 comprend un alésage dans lequel est inséré un manchon 120 destiné à recevoir l'axe 170. De façon similaire, la liaison rotule entre le corps de la manille 100 et l'axe de fixation 180 est réalisée grâce à une bague 130 dite elle aussi bague intérieure, de forme globalement sphérique, agencée dans une cavité traversante présentant une surface de forme complémentaire à la surface de la zone sphérique de la bague 130. La bague 130 comprend un alésage dans lequel est inséré un manchon 140 destiné à recevoir l'axe 180.

Les bagues 110 et 130 présentent donc des zones sphériques destinées à être en contact avec les surfaces des cavités traversantes, de formes complémentaires, dans lesquelles elles sont respectivement insérées. Les bagues 110 et 130, ainsi agencées, sont libres en rotation dans leurs logements et sont configurées pour opérer des liaisons rotules.

Avantageusement, des revêtements antifriction sont utilisés pour les liaisons rotules décrites, ainsi qu'entre l'axe 170 et le manchon 120 et entre l'axe 180 et le manchon 130.

En effet, de tels revêtements antifriction permettent de réaliser une interface d'adaptation de lubrification et de dureté interposée par exemple entre deux pièces en Titane ou en alliage de Titane opérant entre elles des mouvements relatifs.

Une telle interface comporte le plus souvent deux revêtements formant des couches d'adaptation, parmi lesquelles :
- une première couche d'adaptation est déposée sur la première pièce et a une dureté inférieure à celle de la première pièce, cette première couche comporte une morphologie microporeuse, lui conférant une fonction d'adaptation de lubrification en retenant la graisse d'un lubrifiant liquide dans des micropores,
- une deuxième couche d'adaptation coopérant avec la première couche et déposée sur la deuxième pièce, cette deuxième couche comporte une dureté supérieure à celle de la première couche et comporte de plus une fonction d'adaptation de lubrification en libérant des lubrifiants solides sous l'effet de frottement avec la première pièce.

Classiquement, les points de fixation des parties arrière des moteurs sont soumis à des contraintes de températures plus importantes du fait des températures élevées produites par le fonctionnement des moteurs et certaines caractéristiques d'un tel ensemble de fixation peuvent varier, selon que cet ensemble de fixation est destiné à opérer une liaison en un point avant (d'une partie avant) ou en un point arrière (d'une partie arrière) d'un moteur d'aéronef.

Ainsi, par exemple, le corps de la manille 100, les bagues 110 et 130 ainsi que les manchons 120 et 140 sont préférentiellement réalisés en Titane (Ta6V ou dans une autre variante d'alliage de Titane) dans le cas d'une utilisation pour opérer un point de fixation à l'avant du moteur ; c'est là un mode d'utilisation dit d'une « manille froide », et ces mêmes éléments sont préférentiellement réalisés en Inconel 718 (ou dans une autre variante d'alliage d'acier), dans le cas d'une utilisation pour opérer un point de fixation à l'arrière du moteur ; et c'est là un mode d'utilisation dit d'une « manille chaude ».

De la même façon que pour ce qui concerne les matériaux utilisés pour la fabrication du corps de la manille 100, des bagues 110 et 130 et des manchons 120 et 140, des caractéristiques des revêtements antifriction utilisés peuvent varier en présence d'un mode d'utilisation dit « manille froide », à l'avant d'un moteur, ou « manille chaude », à l'arrière d'un moteur.

Selon un mode de réalisation, les revêtements antifriction suivants sont utilisés pour une « manille froide » agencée à l'avant d'un moteur :
- un revêtement du corps de la manille 100, apposé sur la surface présentant une forme complémentaire à la zone sphérique de la bague est réalisé en matériau nanocomposite WC :C-H,
- un revêtement apposé sur la zone sphérique de chacune des bagues 110 et 130 est réalisé dans un alliage Cuivre Nickel Indium de type Cu36Ni5In,
- un revêtement apposé sur la surface de l'alésage des manchons 120 et 140, y compris sur la partie évasée de l'alésage, est réalisé dans un alliage Cuivre Nickel Indium de type Cu36Ni5In ou dans un alliage Cuivre Aluminium Fe de type CuAlFe,
- un revêtement apposé sur chacun des axes 170 et 180 est réalisé dans un matériau nanocomposite de type WC:C-H,
et les revêtements antifriction suivants sont utilisés pour une « manille chaude » agencée à l'arrière du moteur :
- un revêtement du corps de la manille 100, apposé sur la surface présentant une forme complémentaire à la zone sphérique de la bague est réalisé par traitement dans la masse du corps de la manille 100, le traitement dans la masse étant une cémentation basse pression,
- un revêtement apposé sur la zone sphérique de chacune des bagues 110 et 130 est réalisé dans un alliage de Cobalt,
- un revêtement apposé sur la surface de l'alésage des manchons 120 et 140, y compris sur la partie évasée de l'alésage, est réalisé dans un alliage de Cobalt,
- un revêtement apposé sur chacun des axes 170 et 180 est réalisé dans un matériau nanocomposite de type WcCo.

Selon un mode de réalisation, les revêtements respectivement apposés sur les surfaces des zones sphériques des bagues 110 et 130 et sur l'alésage des manchons présentent une épaisseur comprise entre 50 µm et 300 µm, préférentiellement 100 µm et les revêtements respectivement apposés sur les surfaces des alésages du corps de la manille 100, de forme complémentaire aux formes des surfaces des zones sphériques des bagues 110 et 130 et sur les surfaces externes des axes 170 et 180, présentent une épaisseur comprise en 0,2 µm et 50 µm, préférentiellement 5 µm.

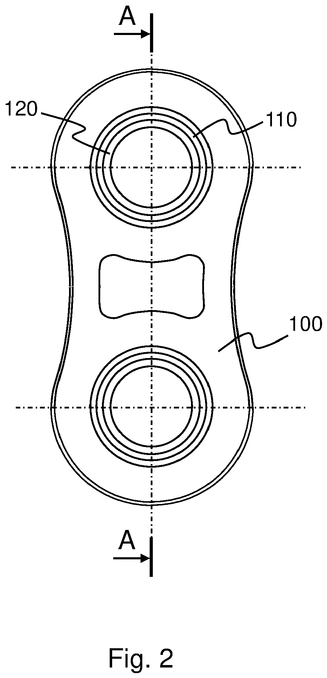

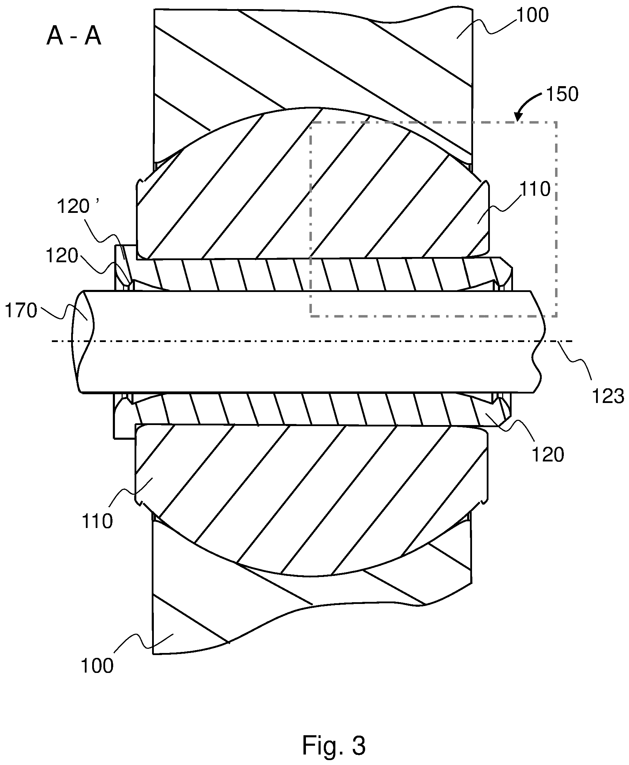

La **Fig. 2** est une vue de face illustrant la manille de fixation 100 et définissant un plan de coupe A-A par rapport au corps de la manille ainsi qu'à la bague 110 et au manchon 120, configurés pour opérer conjointement une liaison rotule avec l'axe 170 (non représenté sur la Fig.2). Le plan de coupe A-A est utilisé pour des illustrations en rapport avec les Fig. 3, Fig. 4 et Fig. 5 décrites ci-après.

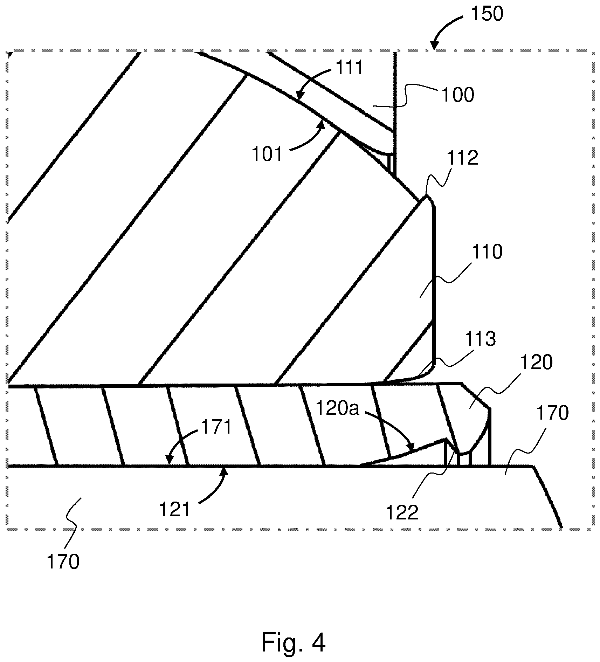

La **Fig.3** est une coupe partielle de la manille de fixation 100 selon le plan de coupe A-A illustrant la liaison rotule entre le corps de la manille 100 et l'axe 170 opérée par l'agencement de la bague 110 et du manchon 120. Le manchon 120 est inséré dans un alésage de la bague 110, laquelle présente une forme globale extérieure de bille logée dans une cavité sphérique du corps de la manille 100, cavité de forme globalement complémentaire à la forme de la bague 110. Le manchon 120 comprend un alésage agencé autour d'un axe longitudinal 123, alésage configuré pour recevoir l'axe 170. Il existe donc des surfaces de contact entre la zone sphérique de la bague 110 et le corps de la manille 100 d'une part, et entre la surface intérieure du manchon 120 et l'axe 170, d'autre part. L'agencement de la liaison rotule opérée par la bague 130 et le manchon 140 n'est pas représenté ici puisqu'il est similaire à celui de la bague 110 et du manchon 120. Une fenêtre rectangulaire 150 de la Fig.3 apparaît agrandie sur la Fig. 4 aux fins de mieux décrire certains détails d'implémentation.

La **Fig. 4** représente de façon agrandie la fenêtre de la Fig.3 pour illustrer plus lisiblement des détails d'implémentation.

S'agissant de la liaison entre la bague 110 et le corps de la manille 100, la surface de la zone sphérique de la bague 110 porte un revêtement 111 dit « épais », d'une épaisseur de l'ordre de 100 µm (comprise entre 50 µm et 300 µm), et réalisé dans un alliage Cuivre Nickel Indium de type Cu36Ni5In pour une utilisation de la manille 100 à un point de fixation avant d'un moteur ou réalisé dans un alliage de Cobalt pour une utilisation de la manille à un point de fixation arrière d'un moteur. La surface du corps de manille 100, de forme complémentaire à la surface de la zone sphérique de la bague 110, porte un revêtement 101, dit « fin », d'une épaisseur de l'ordre de 5 µm (comprise entre 0,2 µm et 50 µm), et réalisé en matériau nanocomposite WC :C-H, pour une manille de point de fixation avant pour une application dite « manille froide » ou réalisé par traitement dans la masse (cémentation basse pression) du corps de la manille pour une manille de point de fixation arrière pour une application dite « manille chaude ». Astucieusement, un rebord 112 forme saillie et trottoir par rapport à la surface de la zone sphérique de la bague 110 pour encapsuler le revêtement épais 111 apposé sur la surface de la zone sphérique de la bague 110, évitant ainsi que le bord du revêtement 111 ne puisse s'écailler ou peler en se désagrégeant alors progressivement sur une surface toujours plus importante. Avantageusement, le rebord 112 formant saillie et trottoir sur la surface de la zone sphérique de la bague 110 est circonférentiel, c'est-à-dire qu'il présente une arête sur tout le périmètre du bord extrémal libre de la bague 110. Avantageusement, la saillie du rebord 112 permet de former à la fois une cuvette dont le fond est revêtu du revêtement 111 ainsi qu'une butée de protection latérale du revêtement 111.

S'agissant de la liaison entre le manchon 120 et l'axe 170, la surface intérieure du manchon 120, soit en d'autres termes la surface de l'alésage du manchon 120, porte un revêtement 121 dit « épais », d'une épaisseur de l'ordre de 100 µm (comprise entre 50 µm et 300 µm) et réalisé dans un alliage Cuivre Nickel Indium de type Cu36Ni5In ou dans un alliage Cuivre Aluminium Fe de type CuAlFe pour une utilisation de la manille à un point de fixation avant d'un moteur ou en alliage de Cobalt pour une utilisation de la manille à un point de fixation arrière d'un moteur. Astucieusement, un rebord 122 forme saillie et trottoir pour encapsuler le revêtement épais 121 apposé sur la surface de l'alésage du manchon 120, y compris dans une zone 120a où le diamètre de l'alésage s'accroît en allant vers l'extrémité du manchon 120 et en présentant une forme évasée jusqu'au rebord 122. Là encore, cela permet d'éviter que le bord du revêtement 121 ne puisse s'écailler ou peler et se désagréger ensuite progressivement sur une surface toujours plus importante. Avantageusement, le rebord 122 formant saillie et trottoir sur la surface de l'alésage du manchon 120 est circonférentiel, c'est-à-dire qu'il présente une arête sur tout le périmètre du bord extrémal libre de l'alésage. Avantageusement, la saillie du rebord 122 permet de former à la fois une cuvette dont le fond est revêtu du revêtement 121 ainsi qu'une butée de protection latérale du revêtement 121.

L'axe 170 engagé dans le manchon 120 porte un revêtement 171 dit « fin ». La Fig. 4 illustre l'agencement des éléments entre eux et la localisation des revêtements d'un côté seulement de la bague 110, ou en d'autres termes à une extrémité seulement du manchon 120. Cependant, l'agencement décrit est le même de l'autre côté de la bague 110, c'est-à-dire à l'autre extrémité du manchon 120, si bien qu'il existe donc deux bords 112 et deux bords 122 respectivement usinés sur la bague 110 et sur l'alésage du manchon 120. Il est à noter toutefois que le manchon 120 n'est pas complètement semblable à ses deux extrémités puisqu'il comprend un épaulement 120' du côté de l'alésage de la bague 110 par lequel il est inséré dans cette dernière. La forme évasée de l'alésage du manchon 120 est présente des deux côtés du manchon 120 pour simplifier l'insertion de l'axe 170 en facilitant son guidage et en prévenant tout risque d'endommagement des revêtements lors de l'insertion, parallèlement à l'axe longitudinal de l'alésage du manchon 120. Bien évidemment, les dimensions des éléments représentés sur les figures ne correspondent pas à une échelle de référence et des caractéristiques sont représentées de façon surdimensionnée pour faciliter la lisibilité de la description des modes de réalisation. Par exemple, la hauteur des bords 112 et 122 est délibérément exagérée sur les figures, tout comme l'est la forme évasée des extrémités de la surface intérieure du manchon 120, soit en d'autres termes de l'alésage du manchon 120.

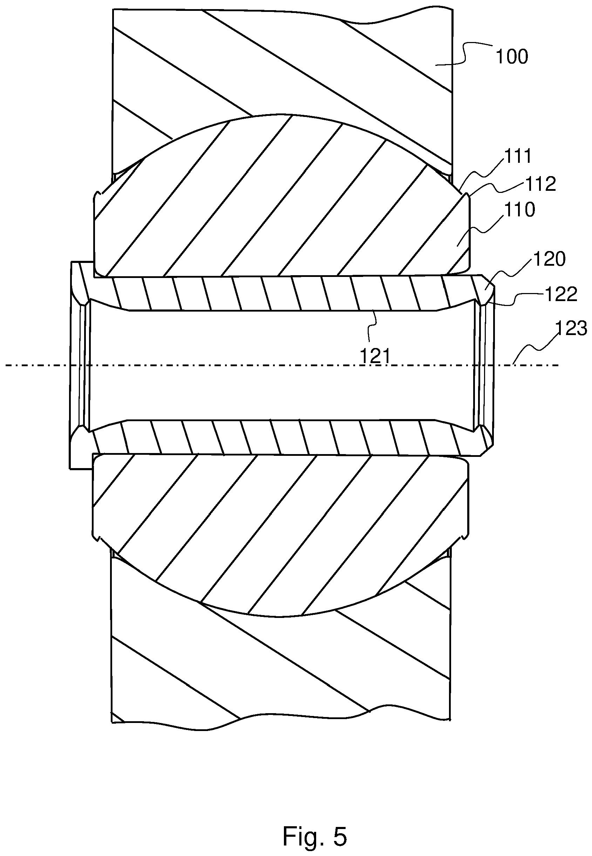

La Fig. 5 illustre l'ensemble des éléments composant la liaison rotule entre le corps de la manille 100 et l'axe 170, à savoir la bague 110 dans laquelle est inséré le manchon 120 présentant un alésage dont les extrémités sont de forme évasée, réalisé autour d'un axe 123. Les surfaces portant les revêtements épais 111 et 121 sont respectivement bordées par les rebords 112 et 122.

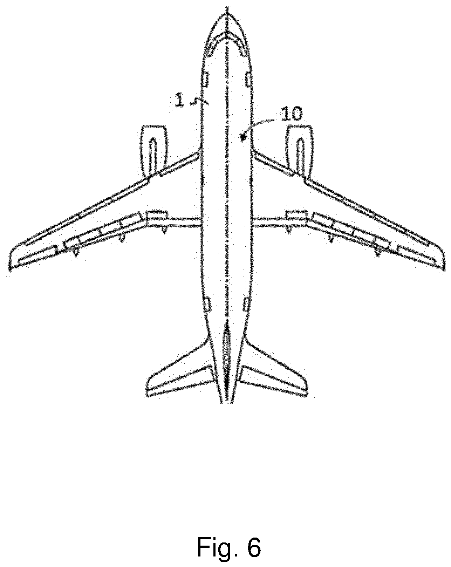

La **Fig. 6** illustre un aéronef 1 comprenant au moins la manille 100 ou une manille de fixation d'un moteur semblable à la manille 100, ce qui permet d'accroître avantageusement la longévité des attaches moteurs.

L'invention ne se limite pas aux seuls modes de réalisation et exemples décrits ci-avant, mais concerne plus généralement toute pièce mécanique, telle qu'une manille de fixation d'un moteur d'aéronef par exemple, comprenant un revêtement antifriction apposé sur une zone bordée par un rebord aux fins d'encapsuler ce revêtement et de limiter les risques d'abrasion, d'écaillement, de décollement ou de désagrégation prématurés de ce revêtement. En particulier, des variantes peuvent comprendre d'autres revêtements antifriction que ceux énoncés dans les exemples décrits. Selon des variantes, également une manille de fixation d'un moteur selon l'invention peut être configurée pour comprendre plus de deux points de fixation à un axe, par exemple trois points de fixation à un axe.

Selon des variantes encore, la surface de la zone sphérique de la bague d'une liaison rotule telle que décrite porte un revêtement antifriction bordé d'un rebord de protection et la surface de l'alésage du manchon de la même liaison rotule ne porte pas de revêtement antifriction ou porte un revêtement antifriction qui n'est pas bordé d'un rebord de protection.

Selon des variantes encore, la surface de l'alésage d'un manchon d'une liaison rotule telle que décrite porte un revêtement antifriction bordé d'un rebord de protection et la surface de la zone sphérique de la bague de la même liaison rotule ne porte pas de revêtement antifriction ou porte un revêtement antifriction qui n'est pas bordé d'un rebord de protection.

## Revendications

1. Manille (100) pour la fixation d'un moteur d'aéronef (1) à un mât solidaire de la structure de l'aéronef (1), par l'intermédiaire d'au moins un axe (170), la manille (100) comprenant un corps et un point de fixation audit axe (170) par l'intermédiaire d'une liaison rotule, la liaison rotule comprenant une bague (110) présentant une zone extérieure sphérique et un premier alésage, la bague (110) étant assemblée dans une cavité du corps de la manille (100) présentant une forme complémentaire à ladite zone extérieure sphérique,
la manille (100) étant **caractérisée en ce que** :
- la liaison rotule comprend un manchon (120) assemblé dans le premier alésage et présentant un deuxième alésage configuré pour recevoir ledit axe (170) et dont le diamètre s'accroît progressivement pour présenter une surface intérieure évasée à chacune de ses extrémités,
- la surface extérieure sphérique de la bague (110) porte un premier revêtement (111) antifriction réalisé sur une première zone s'étendant au-delà de sa zone de contact avec le corps de la manille (100) et ladite première zone de la bague (110) est bordée par des premiers rebords (112) formant saillie par rapport à la surface extérieure sphérique de la bague (110), autour du premier revêtement (111), de sorte à former une butée de protection du premier revêtement et à l'encapsuler, et/ou
- le deuxième alésage du manchon (120) porte un deuxième revêtement (121) antifriction, sur une deuxième zone s'étendant au-delà de sa zone de contact avec ledit axe (170) et ladite deuxième zone est bordée par des deuxièmes rebords (122) formant saillie par rapport à la surface du deuxième alésage, autour du deuxième revêtement (121), aux extrémités de la surface intérieure évasée de l'alésage du manchon (120), de sorte à former une butée de protection du deuxième revêtement et à l'encapsuler.

2. Manille (100) pour la fixation d'un moteur d'aéronef selon la revendication 1, dans laquelle lesdits premiers (112) et deuxièmes (122) rebords présentent une hauteur supérieure ou égale à 0,1 mm.

3. Manille (100) pour la fixation d'un moteur d'aéronef selon l'une des revendications 1 et 2, dans laquelle la surface de la cavité du corps de la manille présentant une forme complémentaire à ladite zone extérieure sphérique de la bague porte un troisième revêtement (101) antifriction.

4. Manille (100) selon l'une quelconque des revendications 1 à 3, dans laquelle le premier revêtement (111) antifriction est réalisé dans un alliage Cuivre Nickel Indium de type Cu36Ni5In ou dans un alliage de Cobalt et présente une épaisseur comprise en 50 µm et 300 µm.

5. Manille (100) selon l'une quelconque des revendications 1 à 4, dans laquelle le deuxième revêtement (121) antifriction est réalisé dans un alliage Cuivre Nickel Indium de type Cu36Ni5In, dans un alliage Cuivre Aluminium Fe de type CuAlFe, ou dans un alliage de Cobalt et présente une épaisseur comprise entre 50 µm et 300 µm.

6. Manille (100) selon la revendication 3, dans laquelle le troisième revêtement (101) antifriction est réalisé par traitement dans la masse ou en matériau nanocomposite de type WC:C-H et présente une épaisseur comprise en 0,2 µm et 50 µm.

7. Manille (100) selon l'une quelconque des revendications 1 à 6, dans laquelle le corps, la bague et le manchon sont réalisés dans un même matériau choisi parmi : les alliages de Titanes ou les alliages d'acier.

8. Ensemble de fixation (10) comprenant une manille (100) selon l'une des revendications 1 à 7, et un axe (170) portant sur sa surface externe un quatrième revêtement (171) antifriction réalisé dans un matériau nanocomposite de type WC:C-H ou WcCo et présentant une épaisseur comprise en 0,2 µm et 50 µm.

9. Ensemble de fixation (10) selon la revendication précédente, dans lequel l'axe (170) est réalisé dans un matériau choisi parmi : les alliages de Titane ou les alliages d'acier.

10. Aéronef (1) comprenant une manille (100) selon l'une des revendications 1 à 6, ou un ensemble de fixation (10) selon l'une des revendications 7 et 8.

## Patentansprüche

1. Schäkel (100) zur Befestigung eines Triebwerks eines Luftfahrzeugs (1) an einem fest mit der Struktur des Luftfahrzeugs (1) verbundenen Mast über mindestens eine Achse (170), wobei der Schäkel (100) einen Körper und einen Punkt zur Befestigung an der Achse (170) über eine Kugelgelenkverbindung umfasst, wobei die Kugelgelenkverbindung einen Ring (110) umfasst, der einen kugelförmigen Außenbereich und eine erste Bohrung aufweist, wobei der Ring (110) in einem Hohlraum des Körpers des Schäkels (100) montiert ist, der eine zum kugelförmigen Außenbereich komplementäre Form aufweist,
wobei der Schäkel (100) **dadurch gekennzeichnet ist, dass**:
- die Kugelgelenkverbindung eine Hülse (120) umfasst, die in der ersten Bohrung montiert ist und eine zweite Bohrung aufweist, die dazu konfiguriert ist, die Achse (170) aufzunehmen, und deren Durchmesser allmählich zunimmt, um eine an jedem ihrer Enden aufgeweitete Innenfläche aufzuweisen,
- die kugelförmige Außenfläche des Rings (110) eine erste reibungsmindernde Beschichtung (111) trägt, die über einem ersten Bereich ausgebildet ist, der sich über seinen Kontaktbereich mit dem Körper des Schäkels (100) hinaus erstreckt, und der erste Bereich des Rings (110) durch erste Kanten (112) begrenzt ist, die in Bezug auf die kugelförmige Außenfläche des Rings (110) um die erste Beschichtung (111) herum vorstehen, um einen Schutzanschlag der ersten Beschichtung zu bilden und diese einzukapseln, und/oder
- die zweite Bohrung der Hülse (120) eine zweite reibungsmindernde Beschichtung (121) über einen zweiten Bereich trägt, der sich über seinen Kontaktbereich mit der Achse (170) hinaus erstreckt, und der zweite Bereich durch zweite Kanten (122) begrenzt ist, die in Bezug auf die Oberfläche der zweiten Bohrung um die zweite Beschichtung (121) herum an den Enden der aufgeweiteten Innenfläche der Bohrung der Hülse (120) vorstehen, um einen Schutzanschlag der zweiten Beschichtung zu bilden und diese einzukapseln.

2. Schäkel (100) zur Befestigung eines Luftfahrzeugtriebwerks nach Anspruch 1, wobei die ersten (112) und die zweiten Kanten (122) eine Höhe von 0,1 mm oder mehr aufweisen.

3. Schäkel (100) zur Befestigung eines Luftfahrzeugtriebwerks nach einem der Ansprüche 1 und 2, wobei die Oberfläche des Hohlraums des Körpers des Schäkels, die eine zum kugelförmigen Außenbereich des Rings komplementäre Form aufweist, eine dritte reibungsmindernde Beschichtung (101) trägt.

4. Schäkel (100) nach einem der Ansprüche 1 bis 3, wobei die erste reibungsmindernde Beschichtung (111) aus einer Kupfer-Nickel-Indium-Legierung vom Typ Cu36Ni5In oder in einer Kobaltlegierung ausgeführt ist und eine Dicke zwischen 50 µm und 300 µm aufweist.

5. Schäkel (100) nach einem der Ansprüche 1 bis 4, wobei die zweite reibungsmindernde Beschichtung (121) aus einer Kupfer-Nickel-Indium-Legierung vom Typ Cu36Ni5In, einer Kupfer-Aluminium-Eisen-Legierung vom Typ CuAlFe oder einer Kobaltlegierung ausgeführt ist und eine Dicke zwischen 50 µm und 300 µm aufweist.

6. Schäkel (100) nach Anspruch 3, wobei die dritte reibungsmindernde Beschichtung (101) durch Behandlung in der Masse oder aus einem Nanokompositmaterial vom Typ WC:C-H ausgebildet ist und eine Dicke zwischen 0,2 µm und 50 µm aufweist.

7. Schäkel (100) nach einem der Ansprüche 1 bis 6, wobei der Körper, der Ring und die Hülse aus demselben Material ausgebildet sind, das aus Titanlegierungen oder Stahllegierungen ausgewählt ist.

8. Befestigungsanordnung (10), umfassend einen Schäkel (100) nach einem der Ansprüche 1 bis 7 und eine Achse (170), die auf ihrer Außenfläche eine vierte reibungsmindernde Beschichtung (171) trägt, die aus einem Nanokompositmaterial vom Typ WC:C-H oder WcCo ausgebildet ist und eine Dicke zwischen 0,2 µm und 50 µm aufweist.

9. Befestigungsanordnung (10) nach dem vorangehenden Anspruch, wobei die Achse (170) aus einem Material ausgebildet ist, das aus Titanlegierungen oder Stahllegierungen ausgewählt ist.

10. Luftfahrzeug (1), umfassend einen Schäkel (100) nach einem der Ansprüche 1 bis 6 oder eine Befestigungsanordnung (10) nach einem der Ansprüche 7 und 8.

## Claims

1. Shackle (100) for fastening an engine of an aircraft (1) to a pylon secured to the structure of the aircraft (1), via at least one pin (170), the shackle (100) comprising a body and a point for fastening to said pin (170) via a ball joint, the ball joint comprising a ring (110) having a spherical outer region and a first bore, the ring (110) being assembled in a cavity of the body of the shackle (100) having a shape complementary to said spherical outer region,
the shackle (100) being **characterized in that**:
- the ball joint comprises a sleeve (120) assembled in the first bore and having a second bore configured to receive said pin (170) and the diameter of which progressively increases to have a flared inner surface at each of its ends,
- the spherical outer surface of the ring (110) bears a first anti-friction coating (111) produced on a first region extending beyond its contact region with the body of the shackle (100) and said first region of the ring (110) is bordered by first rims (112) forming a projection with respect to the spherical outer surface of the ring (110), around the first coating (111), so as to form a stop for protecting the first coating and to encapsulate it, and/or
- the second bore of the sleeve (120) bears a second anti-friction coating (121) on a second region extending beyond its contact region with said pin (170) and said second region is bordered by second rims (122) forming a projection with respect to the surface of the second bore, around the second coating (121), at the ends of the flared inner surface of the bore of the sleeve (120), so as to form a stop for protecting the second coating and to encapsulate it.

2. Shackle (100) for fastening an aircraft engine according to Claim 1, in which said first (112) and second (122) rims have a height greater than or equal to 0.1 mm.

3. Shackle (100) for fastening an aircraft engine according to either of Claims 1 and 2, in which the surface of the cavity of the body of the shackle having a shape complementary to said spherical outer region of the ring bears a third anti-friction coating (101).

4. Shackle (100) according to any one of Claims 1 to 3, in which the first anti-friction coating (111) is made of a copper-nickel-indium alloy of type Cu36Ni5In or of a cobalt alloy and has a thickness of between 50 µm and 300 µm.

5. Shackle (100) according to any one of Claims 1 to 4, in which the second anti-friction coating (121) is made of a copper-nickel-indium alloy of type Cu36Ni5In, of a copper-aluminium-Fe alloy of type CuAlFe, or of a cobalt alloy and has a thickness of between 50 µm and 300 µm.

6. Shackle (100) according to Claim 3, in which the third anti-friction coating (101) is produced by bulk treatment or made of nanocomposite material of type WC:C-H and has a thickness of between 0.2 µm and 50 µm.

7. Shackle (100) according to any one of Claims 1 to 6, in which the body, the ring and the sleeve are made of the same material chosen from: titanium alloys or steel alloys.

8. Fastening assembly (10) comprising a shackle (100) according to one of Claims 1 to 7, and a pin (170) bearing on its external surface a fourth anti-friction coating (171) made of a nanocomposite material of type WC:C-H or WCCo and having a thickness of between 0.2 µm and 50 µm.

9. Fastening assembly (10) according to the preceding claim, in which the pin (170) is made of a material chosen from: titanium alloys or steel alloys.

10. Aircraft (1) comprising a shackle (100) according to one of Claims 1 to 6, or a fastening assembly (10) according to either of Claims 7 and 8.
